(19) Europäisches Patentamt
European Patent Office
Office européen des brevets

(11) EP 1 810 984 A1

(12) **DEMANDE DE BREVET EUROPEEN**

(43) Date de publication:
**25.07.2007 Bulletin 2007/30**

(51) Int Cl.:
***C08G 18/32*** $^{(2006.01)}$ ***G02B 1/04*** $^{(2006.01)}$

(21) Numéro de dépôt: **07290045.9**

(22) Date de dépôt: **11.01.2007**

(84) Etats contractants désignés:
**AT BE BG CH CY CZ DE DK EE ES FI FR GB GR HU IE IS IT LI LT LU LV MC NL PL PT RO SE SI SK TR**
Etats d'extension désignés:
**AL BA HR MK YU**

(30) Priorité: **20.01.2006 FR 0600552**

(71) Demandeur: **ESSILOR INTERNATIONAL (Compagnie Générale d'Optique)**
**F-94220 Charenton-le-Pont (FR)**

(72) Inventeurs:
- **Jaffrennou, Boris**
**94220 Charenton-le-Pont (FR)**
- **Lesartre, Noémie**
**94220 Charenton-le-Pont (FR)**
- **Mechin, Françoise**
**69621 Villeurbanne (FR)**
- **Pascault, Jean-Pierre**
**69621 Villeurbanne (FR)**

(74) Mandataire: **Cabinet Plasseraud**
**52 rue de la Victoire**
**75440 Paris Cedex 09 (FR)**

(54) **Composition polymérisable à base de polyurethane et de copolymères à blocs et materiau transparent obtenu a partir de celle-ci**

(57) Composition polymérisable comprenant (a) un ou plusieurs polyisocyanates particuliers ou un prépolymère de polyuréthane obtenu par polycondensation d'un polyisocyanate en excès, choisi parmi lesdits polyisocyanates, et d'un ou plusieurs polyols comprenant au moins deux fonctions alcools libres, choisis parmi les bisphénols A polypropoxylés ou polyéthoxylés, et les polycaprolactones-alcools polyfonctionnels; (b) un ou plusieurs polyols comprenant au moins deux fonctions alcools libres, choisis parmi les bisphénols A polypropoxylés ou polyéthoxylés et les polycaprolactones-alcools polyfonctionnels, et les prépolymères de polyuréthane obtenus par polycondensation d'un ou plusieurs polyols en excès, choisis parmi les polyols ci-dessus et d'un ou plusieurs polyisocyanates particuliers; le rapport du nombre de fonctions isocyanate du composant polyisocyanate (a) au nombre de fonctions alcool du composant polyol (b) étant compris entre 1,00 et 1,20;
et (c) de 5 % à 80% en poids, rapporté à la masse totale de (a), (b) et (c), d'un ou plusieurs copolymères à blocs polystyrène-*bloc*-polybutadiène-*bloc*-poly(méthacrylate de méthyle) ; procédé de préparation d'une telle composition et matériau optique transparent obtenu par chauffage de ladite composition.

EP 1 810 984 A1

## Description

La présente invention concerne de nouvelles compositions polymérisables à base de polyols, de polyisocyanates et de copolymères à blocs particuliers, des matériaux finis transparents obtenus par réaction de ces compositions ainsi qu'un procédé de préparation des compositions polymérisables et des matériaux finis transparents. Ces matériaux sont particulièrement utiles pour la réalisation d'articles optiques et plus particulièrement d'articles ophtalmiques.

Il existe deux types de substrats généralement utilisés pour la fabrication d'articles d'optique, notamment de lentilles ophtalmiques, à savoir les substrats en verre minéral et les substrats en verre organique. Actuellement le marché se développe très largement en faveur des verres organiques qui présentent l'avantage d'être plus légers que les verres minéraux et de présenter une meilleure résistance aux chocs. Les substrats en verre organique les plus utilisés sont le polycarbonate thermoplastique et celui obtenu par polymérisation de bis(allylcarbonate) de diéthylèneglycol.

Dans le cadre de ses recherches visant à développer continuellement de nouveaux matériaux performants pour la fabrication de matériaux optiques, la Demanderesse a trouvé que les matériaux de type polyuréthane sont des candidats intéressants pour la fabrication de matériaux transparents susceptibles d'être utilisés par exemple pour la fabrication de produits optiques, tels que des lentilles ophtalmiques ou des films polymériques de qualité optique.

De tels matériaux sont connus de l'homme de l'art. Néanmoins, la manipulation des précurseurs de type polyols et polyisocyanates sous forme liquide, état sous lequel ces composés existent, est contraignante. Cette contrainte est renforcée par le fait que les isocyanates sont des composés toxiques nécessitant des conditionnements spécifiques pour leur manipulation et leur stockage sous forme liquide. Enfin ces produits à l'état liquide présentent généralement une réactivité élevée limitant leur aptitude au stockage dans de bonnes conditions.

La réaction entre une fonction isocyanate et une fonction alcool peut être très rapide et la mise en oeuvre des polyuréthanes peut nécessiter par conséquent l'utilisation de procédés assez complexes tels que le moulage par injection-réaction *(Reaction Injection Molding)* ou RTM (Reaction Transfer Molding). Il peut être intéressant de pouvoir mettre en oeuvre les polyuréthanes par des procédés plus simples tels que l'extrusion, l'injection ou la co-extrusion, ainsi que de pouvoir disposer de compositions solides permettant d'obtenir de tels polyuréthanes, lesquelles compositions seraient beaucoup plus faciles à stocker, à conditionner et à mettre en forme.

Plus particulièrement la Demanderesse a donc mis au point de nouvelles compositions polymérisables à base de polyols, de polyisocyanates et de copolymères à blocs particuliers. Ces compositions, après une étape de polymérisation thermique, donnent un matériau transparent de type polyuréthane et présentent les propriétés physiques requises pour être utilisées notamment dans la fabrication d'articles ophtalmiques.

L'incorporation de tels copolymères à blocs dans des matrices époxydes est notamment décrite dans la demande de brevet WO 01/92415. Les matériaux époxy modifiés par l'introduction des copolymères à blocs conservent leur transparence, voient leurs propriétés mécaniques améliorées et ne subissent qu'une faible chute de la Tg (température de transition vitreuse).

La présente invention a par conséquent pour objet une composition polymérisable comprenant :

(a) - un ou plusieurs polyisocyanates comprenant au moins deux fonctions isocyanate libres, choisis parmi:

(1) le xylylène-diisocyanate (XDI), le *méta*-tétraméthyl-xylylène-diisocyanate (TMXDI), les diisocyanates cycloaliphatiques, le trimère de l'isophorone-diisocyanate et le trimère de l'hexaméthylène-diisocyanate; et
(2) les prépolymères de polyuréthane obtenus par polycondensation d'un ou plusieurs polyisocyanates en excès, choisis parmi les polyisocyanates (1) ci-dessus, et d'un ou plusieurs polyols comprenant au moins deux fonctions alcools libres, choisis dans la famille des bisphénols A polypropoxylés comportant en moyenne de 1 à 10 motifs d'oxyde de propylène de part et d'autre du groupement central bisphénol A, la famille des bisphénols A polyéthoxylés comportant en moyenne de 1 à 15 motifs d'oxyde d'éthylène de part et d'autre du groupement central bisphénol A, et la famille des polycaprolactones-alcools difonctionnels, trifonctionnels et tetrafonctionnels;

(b) - un ou plusieurs polyols comprenant au moins deux fonctions alcools libres, choisis parmi :

(1) la famille des bisphénols A polypropoxylé comportant en moyenne de 1 à 10 motifs d'oxyde de propylène de part et d'autre du groupement central bisphénol A, la famille des bisphénols A polyéthoxylés comportant en moyenne de 1 à 15 motifs d'oxyde d'éthylène de part et d'autre du groupement central bisphénol A, et la famille des polycaprolactones-alcools difonctionnels, trifonctionnels et tetrafonctionnels;
(2) les prépolymères de polyuréthane obtenus par polycondensation d'un ou plusieurs polyols en excès, choisis parmi les polyols (1) ci-dessus et d'un ou plusieurs polyisocyanates choisis parmi le xylylène-diisocyanate (XDI), le *méta*-tétraméthyl-xylylène-diisocyanate (TMXDI), les diisocyanates cycloaliphatique, le trimère de l'isophorone diisocyanate et le trimère de l'hexaméthylène-diisocyanate; le rapport du nombre de fonctions isocyanate

du composant polyisocyanate (a) au nombre de fonctions alcool du composant polyol (b) étant compris entre 1,00 et 1,20;

(c) et de 5 % à 80% en poids, rapporté à la masse totale de (a), (b) et (c), d'un ou plusieurs copolymères à blocs polystyrène-bloc-polybutadiène-bloc-poly(méthacrylate de méthyle) (SBM).

Les copolymères à blocs polystyrène-bloc-polybutadiène-bloc-poly(méthacrylate de méthyle) peuvent être introduits lors de la préparation de la composition polymérisable soit par mélange avec le composant polyisocyanate (a), soit par mélange avec le composant polyol (b) de la composition polymérisable, soit par mélange à la fois avec le composant polyisocyanate (a) et avec le composant polyol (b) de la composition.

Dans ce dernier cas, l'invention comprend la possibilité d'utiliser des copolymères à blocs polystyrène-*bloc*-polybutadiène-*bloc*-poly(méthacrylate de méthyle) (SBM) de masse molaire et de compositions différentes dans le composant polyisocyanate (a) de la composition et dans le composant polyol (b) de ladite composition polymérisable. La proportion massique de copolymères à blocs dans la partie polyisocyanate (a) et dans la partie polyol (b) peut être différente.

De préférence, le ou les copolymères à blocs mélangés, lors de la préparation de la composition polymérisable, avec le composant polyisocyanate (a) sont identiques à ceux mélangés avec le composant polyol (b).

Dans une variante particulièrement avantageuse de l'invention, le ou les polyisocyanates utilisés dans le composant polyisocyanate (a) sont identiques à ceux utilisés dans le composant polyol (b), le ou les polyols utilisés dans le composant polyisocyanate (a) sont identiques à ceux utilisés dans le composant polyol (b), et le copolymère à blocs (c) mélangé, lors de la préparation de la composition polymérisable, avec le composant polyisocyanate (a) est identique à celui mélangé avec le composant polyol (b).

Une telle composition, après réaction sous l'effet de la chaleur, donne lieu à un matériau polyuréthane (PU) ayant une transparence adaptée permettant son utilisation en tant que matériau optique, par exemple pour la fabrication de lentilles ophtalmiques, ou de supports tels que des films compatibles avec une utilisation ophtalmique.

En outre, la présente invention a pour objet un matériau transparent obtenu par réaction sous l'effet de la chaleur de la composition polymérisable ci-dessus, ainsi qu'un article optique, de préférence une lentille ophtalmique, comprenant un tel matériau.

Dans la présente demande, les définitions de certains termes doivent être comprises de la façon suivante :

- par article optique on entend les lentilles optiques d'instrumentation et de visée, les visières et les lentilles ophtalmiques, ainsi que les films de qualité optique pouvant éventuellement être utilisés au sein d'une lentille optique, d'une visière ou d'une lentille ophtalmique;
- par lentille ophtalmique, on entend les lentilles s'adaptant notamment à une monture de lunette, ayant pour fonction de protéger l'oeil et/ou de corriger la vue, ces lentilles étant choisies parmi les lentilles afocales, unifocales, bifocales, trifocales et progressives.

La présente invention a en outre pour objet un procédé de préparation de la composition polymérisable et un procédé de préparation du matériau polyuréthane qui seront décrits plus en détail ci-après.

Selon un mode de réalisation préférée de l'invention, l'isocyanate utilisé est un diisocyanate cycloaliphatique. Le diisocyanate préféré pour la préparation des polyuréthanes de la présente invention est l'isophorone-diisocyanate (IPDI).

Dans la présente invention, on utilisera de préférence pour la préparation de la composition polymérisable un bisphénol A polypropoxylé comprenant en moyenne de 1 à 10 motifs d'oxyde de propylène (PO) de part et d'autre du groupement bisphénol A, et préférentiellement de 3,5 à 8 motifs d'oxyde de propylène de part et d'autre du groupement central bisphénol A, seul ou en mélange, et en particulier un bisphénol A polypropoxylé comprenant en moyenne 3,5, 5,5 ou 7,5 motifs d'oxyde de propylène de part et d'autre du groupement central bisphénol A, appelés ci-après respectivement BPA-PO3,5, BPA-PO5,5 et BPA-PO-7,5.

Il est en outre important d'utiliser dans la composition polymérisable de la présente invention un rapport molaire du nombre de fonctions isocyanate au nombre de fonctions alcool proche de 1 voire légèrement supérieur à cette valeur. En effet, une presque stoechiométrie de ces deux types de fonctions assure un degré de polymérisation suffisant pour l'obtention d'un matériau à température de transition vitreuse (Tg) élevée, utilisable notamment pour la fabrication de lentilles ophtalmiques. Ainsi selon une variante préférentielle de l'invention, la composition polymérisable présente un rapport du nombre de fonctions isocyanate du composant polyisocyanate (a) au nombre de fonctions alcool du composant polyol (b) compris entre 1,00 et 1,05.

La composition polymérisable de la présente invention contient de préférence de 30 à 80 % en poids, rapporté à la masse totale de (a), (b) et (c), plus préférentiellement de 40 à 60 % en poids et en particulier environ 50 % en poids de copolymères à blocs polystyrène-*bloc*-polybutadiène-*bloc*-poly(méthacrylate de méthyle) (SBM). Cette quantité minimale permet entre autres une amélioration des propriétés physiques et notamment mécaniques du matériau obtenu à partir de cette composition polymérisable.

Les copolymères à blocs utilisables dans le cadre de l'invention sont notamment décrits dans les demandes de brevet WO 2005/073314 et WO 2005/014699. On se référera particulièrement à ces documents pour une description détaillée des parties poly(styrène) S, poly(butadiène) B et poly(méthacrylate de méthyle) M desdits copolymères à blocs SBM.

Enfin, il est important pour l'obtention de matériaux polyuréthane transparents que le bloc poly(méthacrylate de méthyle) (PMMA) du polymère à blocs représente une fraction importante du copolymère à blocs. Selon une variante avantageuse de l'invention, le bloc de PMMA représente de préférence de 50 % à 80 % en poids, plus préférentiellement de 55 % à 75 % en poids, et en particulier de 60 à 70 % en poids de la masse moléculaire moyenne en poids du copolymère à blocs polystyrène-bloc-polybutadiène-*bloc*-poly(méthacrylate de méthyle). Pour des raisons similaires, la masse moléculaire moyenne en poids dudit bloc poly(méthacrylate de méthyle) est de préférence comprise entre 10 000 et 100 000 g/mol, pour une masse molaire moyenne globale du copolymère à blocs de préférence comprise entre 15 000 et 200 000 g/mol.

Dans le cadre de l'invention il est entendu que les copolymères à blocs utilisés peuvent être un mélange de copolymère triblocs et de copolymère diblocs de type polystyrène-bloc-polybutadiène. Ces copolymères sont notamment décrits dans la demande de brevet WO 2005/073314.

Les matériaux polyuréthane obtenus à partir des compositions polymérisables décrites ci-dessus présentent une transparence suffisante pour une utilisation dans le domaine de l'optique et en particulier dans le domaine ophtalmique. Cette transparence est liée à la structuration du matériau par les copolymères à blocs conduisant à la formation de nanodomaines contenant au moins le bloc B dudit SBM.

Pour améliorer certaines propriétés des produits d'optique fabriqués à partir des matériaux polymérisables de la présente invention, par exemple la résistance aux chocs, la résistance à l'abrasion et aux rayures, le caractère anti-réfléchissant et la résistance aux salissures, il est possible de former sur au moins une des surfaces principales un ou plusieurs revêtements fonctionnels. Il est ainsi tout à fait possible de former successivement sur une face principale de l'article d'optique en polyuréthane selon l'invention un premier revêtement, appelé primaire anti-choc, dont la fonction est d'accroître la résistance aux chocs de l'article mais aussi l'adhésion au substrat de revêtements ultérieurs puis, sur ce revêtement de primaire anti-choc, un revêtement dur, généralement appelé revêtement anti-abrasion ou anti-rayures, dont le but est d'améliorer la capacité de la surface de l'article d'optique à résister aux endommagements dus à des agressions mécaniques. Il est aussi possible de superposer au revêtement anti-abrasion un revêtement anti-reflet, auquel se superpose éventuellement un revêtement anti-salissure dont le rôle est de modifier la tension interfaciale entre la couche anti-reflet et l'eau ou la graisse mais également d'obturer les interstices afin d'empêcher la graisse de s'infiltrer et de subsister. L'article optique peut également comporter un revêtement antistatique.

Comme indiqué précédemment, la présente invention a également pour objet un procédé de préparation d'une composition polymérisable telle que décrite précédemment, comprenant les étapes suivantes:

i. la préparation d'une première composition (A) par mélange du composant polyisocyanate (a) avec un copolymère à blocs polystyrène-*blo*c-polybutadiène-*bloc*-poly(méthacrylate de méthyle) (c), le rapport en poids du composant polyisocyanate (a) au copolymère à blocs (c) étant compris entre 95/5 et 20/80,

ii. la préparation d'une deuxième composition (B) par mélange du composant polyol (b) avec un copolymère à blocs polystyrène-*bloc*-polybutadiène-*bloc*-poly(méthacrylate de méthyle) (c), le rapport en poids du composant polyol (b) au copolymère à blocs (c) étant compris entre 95/5 et 20/80, et

iii. le mélange de la première composition (A) avec la deuxième composition (B) en des quantités respectives telles que le rapport du nombre de fonctions isocyanate au nombre de fonctions alcool soit compris entre 1,00 et 1,20.

Selon une première variante, l'invention comprend aussi un procédé de préparation d'une composition polymérisable comprenant les étapes suivantes :

i. la préparation d'une composition (A) par mélange du composant polyisocyanate (a) avec un copolymère à blocs polystyrène-bloc-polybutadiène-bloc-poly(méthacrylate de méthyle) (c), le rapport en poids du composant polyisocyanate (a) au copolymère à blocs (c) étant compris entre 95/5 et 20/80,

ii. le mélange du composant polyol (b) avec la composition (A) en des quantités respectives telles que le rapport du nombre de fonctions isocyanate au nombre de fonctions alcool soit compris entre 1,00 et 1,20.

Selon une deuxième variante, l'invention comprend aussi un procédé de préparation d'une composition polymérisable comprenant les étapes suivantes:

i. la préparation d'une composition (B) par mélange du composant polyol (b) avec un copolymère à blocs polystyrène-

bloc-polybutadiène-bloc-poly(méthacrylate de méthyle) (c), le rapport en poids du composant polyol (b) au copolymère à blocs (c) étant compris entre 95/5 et 20/80,

ii. le mélange de la composition (B) avec le composant polyisocyanate (a) en des quantités respectives telles que le rapport du nombre de fonctions isocyanate au nombre de fonctions alcool soit compris entre 1,00 et 1,20.

La préparation d'une telle composition polymérisable est particulièrement facilitée par ses possibilités de mise en oeuvre. Ainsi la préparation de la première composition (A) et la préparation de la deuxième composition (B) par mélange de leurs composants respectifs se font de façon séparée et autonome, de préférence par extrusion dans une extrudeuse, de préférence une extrudeuse à double vis, à des températures maximales comprises entre 100 ˚C et 150 ˚C. Cette extrusion est suivie de préférence par la granulation des joncs extrudés en sortie de filière. Les granulés peuvent être stockés facilement. Grâce au procédé de mise en oeuvre de la composition polymérisable selon l'invention il est donc possible d'obtenir et de stocker dans des conditions de température ambiante les deux composants précurseurs du matériau fini polyuréthane de façon indépendante et stable chimiquement.

Les granulés ainsi obtenus peuvent ensuite être introduits en les proportions appropriées dans une extrudeuse, de préférence une extrudeuse double vis, à une température maximale comprise entre 120 et 140 ˚C, de préférence à une température comprise entre 125 et 135 ˚C.

La composition polymérisable extrudée ainsi obtenue conduit alors à une composition polymérisable intermédiaire sous forme d'un mélange réactif. Le stockage à une température inférieure à la température ambiante de ce mélange réactif assure la stabilité des propriétés physico-chimiques et mécaniques de celui-ci. Cette composition polymérisable intermédiaire peut ainsi être stockée sous formes de granulés ou bien de film selon la géométrie de la filière utilisée en sortie de l'extrudeuse.

Dans une autre variante, les deux composants précurseurs du matériau fini polyuréthane obtenus sous forme de granulés indépendants tels que décrits précédemment peuvent être co-extrudés. Dans une telle configuration du procédé, on obtient une composition polymérisable intermédiaire sous forme de granulés ou de film ne présentant pas de mélange intime entre les fonctions réactives de la première composante (A) et les fonctions réactives de la seconde composante (B), mais uniquement une interface ou interphase entre ces deux composants. Une telle composition polymérisable est stable et peut être conservée aisément à température ambiante. Elle peut également être utilisée telle quelle notamment si elle se présente sous la forme d'un film.

La composition polymérisable extrudée ou co-extrudée ainsi obtenue peut ensuite être mise en oeuvre, par exemple par moulage, injection-moulage ou thermoformage et exposée à une température comprise entre 100 ˚C et 170 ˚C pendant une durée comprise entre 1 heure et 15 heures de manière à donner un matériau polymérisé transparent selon la présente invention.

Selon une autre variante préférentielle de l'invention, la première composition (A) sous forme de granulés et la deuxième composition (B) sous forme de granulés, sont mélangées à stoechiométrie (ou quasi-stoechiométrie) des fonctions alcool et isocyanate, sont versées dans la trémie d'une presse à injecter puis injectées dans un moule. La polymérisation thermique au sein du moule de la presse à injecter permet d'obtenir un produit comprenant un matériau transparent polyuréthane. Le moule de la presse à injecter est avantageusement un insert de lentille ophtalmique permettant ainsi d'obtenir des lentilles ophtalmiques.

L'invention est à présent illustrée à l'aide d'un exemple selon l'invention

Exemple 1

La matrice polyuréthane synthétisée est de type *IPDI/BPA-PO3,5.*

*Tableau 1 : Caractéristiques de l'IPDI*

| Diisocyanate | Formule chimique | *M* (g/mol) | $Eq_{NCO}$ (mol/kg) | $n^D_{20}$ | δ $(MPa)^{1/2}$ | Fournisseur |
|---|---|---|---|---|---|---|
| *IPDI* (Isophorone diisocyanate) | 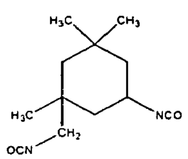 | 222,2 | 8,978 | 1,483 | 21,6 | Crenova |

*Tableau 2 : Caractéristiques du BPA-P03,5 (Fournisseur : SEPPIC S.A.)*

| **Produit** | x+y | $M_n$ (g/mol) | $T_{g\ midpoint}$ (°C) $\Delta C_p$ (J.K$^{-1}$.mol$^{-1}$) | $n^D{}_{20}$ | δ (MPa)$^{1/2}$ |
|---|---|---|---|---|---|
| Simulsol BPMP® *BPA-PO3,5* | 6,8 | 625 | -44 (± 2) 0,55 (± 0,04) | 1,503 | 20,2 |

Le copolymère à blocs utilisé dans cet exemple est un PS-*b*-PB-b-PMMA de masse molaire moyenne en poids de 41 900 g/mol dans lequel la fraction massique du segment PMMA est supérieure à 50 %.

Le matériau polyuréthane nanostructuré par 50 % de SBM a été synthétisé selon le protocole suivant :

⇨ Deux joncs *BPA-P03, 5*/*SBM* et *IPDI*/*SBM* (50/50 en masse) sont extrudés puis granulés. Les granulés ont été préparés dans une micro-extrudeuse à double vis à recirculation de type DSM micro 15. Pour chaque type de granulés, la préparation du mélange est effectuée de la façon suivante : le monomère, sous forme liquide, est d'abord introduit dans l'extrudeuse (à température ambiante pour l'*IPDI,* à 80 °C pour l'alcool) avant ajout progressif de la poudre de SBM. Le mélange est laissé en recirculation pendant 30 min jusqu'à obtention d'un jonc homogène, à une vitesse de vis de 10 tours/min. Le mélange BPA-PO3,5/SBM est mis en oeuvre à 140 °C, le jonc IPDI/SBM est mis en oeuvre à 80 °C. Les quantités incorporées sont:

Jonc 1 *(IPDI/SBM) :*

$$m_{IPDI} = 9{,}212\ \text{g}$$

$$m_{SBM} = 9{,}138\ \text{g}$$

Jonc 2 *(BPA-PO3,5/SBM)*:

$$m_{BPA\text{-}PO3{,}5} = 9{,}418\ \text{g}$$

$$m_{SBM} = 9{,}390\ \text{g}$$

La comparaison entre les valeurs théoriques et expérimentales obtenues par dosage chimique des fonctions isocyanate confirme que les fonctions isocyanate ne sont pas dégradées au cours de la réaction de formation du jonc IPDI/SBM.

Nous obtenons ainsi deux lots de granulés homogènes au niveau macroscopique IPDI/SBM et BPA-PO3,5/SBM.

Les granulés BPA-PO3,5/SBM et IPDI/SBM sont ensuite mélangés sous forme solide au rapport -NCO/-OH = 1 d'après l'équivalent isocyanate déterminé par dosage chimique des granulés isocyanate/SBM et l'indice hydroxyle de l'alcool BPA-PO3,5 préalablement déterminé en suivant le protocole expérimental spécifié dans la norme NF T52-112.

Les masses de granulés mélangés sont les suivantes :

$$m_{granulés\ IPDI/SBM} = 4{,}351\ \text{g}$$

$$m_{granulés\ BPA\text{-}PO3{,}5/SBM} = 12{,}238\ \text{g}$$

Le mélange des deux joncs est incorporé dans la micro-extrudeuse double vis à recirculation de type DSM micro 15 et laissé en recirculation pendant 30 min jusqu'à obtention d'un jonc homogène, à une vitesse de vis de 10 tours/min. Le jonc est récupéré dans un moule en dural recouvert de papier téfloné et contenant une entretoise de 4 mm préchauffé à 150 °C puis le mélange est directement polymérisé sous presse (10 bars) de manière à éviter de faire subir une trempe thermique aux échantillons. Le mélange est ensuite polymérisé à 150 °C pendant 4 heures puis pendant

1 h à 170 ˚C.

**Revendications**

1. Composition polymérisable comprenant :

    (a) - un ou plusieurs polyisocyanates comprenant au moins deux fonctions isocyanate libres, choisis parmi:

        (1) le xylylène-diisocyanate (XDI), le *méta*-tétraméthyl-xylylène-diisocyanate (TMXDI), les diisocyanates cycloaliphatiques, le trimère de l'isophorone-diisocyanate et le trimère de l'hexaméthylène-diisocyanate; et
        (2) les prépolymères de polyuréthane obtenus par polycondensation d'un ou plusieurs polyisocyanates en excès, choisis parmi les polyisocyanates (1) ci-dessus, et d'un ou plusieurs polyols comprenant au moins deux fonctions alcools libres, choisis dans la famille des bisphénols A polypropoxylés comportant en moyenne de 1 à 10 motifs d'oxyde de propylène de part et d'autre du groupement central bisphénol A, la famille des bisphénols A polyéthoxylés comportant en moyenne de 1 à 15 motifs d'oxyde d'éthylène de part et d'autre du groupement central bisphénol A, et la famille des polycaprolactones-alcools difonctionnels, trifonctionnels et tetrafonctionnels;

    (b) - un ou plusieurs polyols comprenant au moins deux fonctions alcools libres, choisis parmi:

        (1) la famille des bisphénols A polypropoxylés comportant en moyenne de 1 à 10 motifs d'oxyde de propylène de part et d'autre du groupement central bisphénol A, la famille des bisphénols A polyéthoxylés comportant en moyenne de 1 à 15 motifs d'oxyde d'éthylène de part et d'autre du groupement central bisphénol A, et la famille des polycaprolactones-alcools difonctionnels, trifonctionnels et tetrafonctionnels;
        (2) les prépolymères de polyuréthane obtenus par polycondensation d'un ou plusieurs polyols en excès, choisis parmi les polyols (1) ci-dessus et d'un ou plusieurs polyisocyanates choisis parmi le xylylène-diisocyanate (XDI), le *méta*-tétraméthyl-xylylène-diisocyanate (TMXDI), les diisocyanates cycloaliphatique, le trimère de l'isophorone diisocyanate et le trimère de l'hexaméthylène-diisocyanate;

            - le rapport du nombre de fonctions isocyanate du composant polyisocyanate (a) au nombre de fonctions alcool du composant polyol (b) étant compris entre 1,00 et 1,20;

    (c) et de 5 % à 80% en poids, rapporté à la masse totale de (a), (b) et (c), d'un ou plusieurs copolymères à blocs polystyrène-*bloc*-polybutadiène-*bloc*-poly(méthacrylate de méthyle) (SBM).

2. Composition polymérisable selon la revendication 1, **caractérisée par le fait que** les copolymères à blocs polystyrène-bloc-polybutadiène-bloc-poly(méthacrylate de méthyle) sont mélangés avec le composant polyisocyanate (a) lors de la préparation de la composition polymérisable.

3. Composition polymérisable selon la revendication 1, **caractérisée par le fait que** les copolymères à blocs polystyrène-*bloc*-polybutadiène-*bloc*-poly(méthacrylate de méthyle) sont mélangés avec le composant polyol (b) lors de la préparation de la composition polymérisable.

4. Composition polymérisable selon la revendication 1, **caractérisée par le fait que** les copolymères à blocs polystyrène-*bloc*-polybutadiène-*bloc*-poly(méthacrylate de méthyle) sont mélangés avec le composant polyisocyanate (a) et avec le composant polyol (b) lors de la préparation de la composition polymérisable, les copolymères à blocs mélangés avec le composant polyisocyanate (a) pouvant être identiques ou différents des copolymères à blocs mélangés avec le composant polyol (b).

5. Composition polymérisable selon la revendication 4, **caractérisée par le fait que** les copolymères à blocs mélangés, lors de la préparation de la composition polymérisable, avec le composant polyisocyanate (a) sont identiques à ceux mélangés avec le composant polyol (b).

6. Composition polymérisable selon l'une quelconque des revendications 1 ou 5, **caractérisée par le fait que** le ou les polyisocyanates utilisés dans le composant polyisocyanate (a) sont identiques à ceux utilisés dans le composant polyol (b), le ou les polyols utilisés dans le composant polyisocyanate (a) sont identiques à ceux utilisés dans le composant polyol (b), et le ou les copolymères à blocs (c) mélangés, lors de la préparation de la composition

polymérisable, avec le composant polyisocyanate (a) sont identiques à celui ou ceux mélangés avec le composant polyol (b).

**7.** Composition polymérisable selon l'une quelconque des revendications précédentes, **caractérisée par le fait que** le polyisocyanate est choisi parmi les diisocyanates cycloaliphatiques.

**8.** Composition polymérisable selon la revendication 7, **caractérisée par le fait que** le poly-isocyanate est l'isophorone-diisocyanate (IPDI).

**9.** Composition polymérisable selon l'une quelconque des revendications précédentes **caractérisée par le fait que** le polyol est choisi dans la famille des bisphénols A polypropoxylés comportant en moyenne de 1 à 10 motifs d'oxyde de propylène (PO) de part et d'autre du groupement bisphénol A.

**10.** Composition polymérisable selon la revendication 9, **caractérisée par le fait que** le polyol est choisi dans la famille des bisphénols A polypropoxylés comprenant en moyenne de 3,5 à 8 motifs d'oxyde de propylène de part et d'autre du groupement central bisphénol A .

**11.** Composition polymérisable selon l'un des revendications 9 ou 10, **caractérisée par le fait que** le polyol est choisi parmi les bisphénols A polypropoxylés comprenant en moyenne 3,5, 5,5 et 7,5 motifs d'oxyde de propylène de part et d'autre du groupement central bisphénol A.

**12.** Composition polymérisable selon la revendication 1, **caractérisée par le fait que** le rapport du nombre de fonctions isocyanate du composant polyisocyanate (a) au nombre de fonctions alcool du composant polyol (b) est compris entre 1,00 et 1,05.

**13.** Composition polymérisable selon la revendication 1, **caractérisée par le fait qu'**elle comprend de 30 à 80% en poids de copolymères à blocs par rapport au poids total de ladite composition.

**14.** Composition polymérisable selon la revendication 13, **caractérisée par le fait qu'**elle comprend de 40 à 60% en poids de copolymères à blocs par rapport au poids total de ladite composition.

**15.** Composition polymérisable selon la revendication 13, **caractérisée par le fait qu'**elle comprend 50% en poids de copolymères à blocs par rapport au poids total de ladite composition.

**16.** Composition polymérisable selon la revendication 1, **caractérisée par le fait que** le bloc poly(méthacrylate de méthyle) (PMMA) du copolymère à blocs représente de 50 % à 80 % en poids de la masse moléculaire moyenne en poids du copolymère à bloc polystyrène-bloc-polybutadiène-bloc-poly(méthacrylate de méthyle), de préférence de 55 % à 75 % en poids, et en particulier de 60 à 70 % en poids.

**17.** Procédé de préparation d'une composition polymérisable selon l'une quelconque des revendications précédentes comprenant les étapes suivantes:

i. la préparation d'une première composition (A) par mélange du composant polyisocyanate (a) avec un copolymère à blocs polystyrène-*bloc*-polybutadiène-*bloc*-poly(méthacrylate de méthyle) (c), le rapport en poids du composant polyisocyanate (a) au copolymère à blocs (c) étant compris entre 95/5 et 20/80,
ii. la préparation d'une deuxième composition (B) par mélange du composant polyol (b) avec un copolymère à blocs polystyrène-*bloc*-polybutadiène-*bloc*-poly(méthacrylate de méthyle) (c), le rapport en poids du composant polyol (b) au copolymère à blocs (c) étant compris entre 95/5 et 20/80, et
iii. le mélange de la première composition (A) avec la deuxième composition (B) en des quantités respectives telles que le rapport du nombre de fonctions isocyanate au nombre de fonctions alcool soit compris entre 1,00 et 1,20.

**18.** Procédé de préparation d'une composition polymérisable selon la revendication 1 comprenant les étapes suivantes:

i. la préparation d'une composition (A) par mélange du composant polyisocyanate (a) avec un copolymère à blocs polystyrène-bloc-polybutadiène-bloc-poly(méthacrylate de méthyle) (c), le rapport en poids du composant polyisocyanate (a) au copolymère à blocs (c) étant compris entre 95/5 et 20/80,
ii. le mélange du composant polyol (b) avec la composition (A) en des quantités respectives telles que le rapport

du nombre de fonctions isocyanate au nombre de fonctions alcool soit compris entre 1,00 et 1,20.

**19.** Procédé de préparation d'une composition polymérisable la revendication 1 comprenant les étapes suivantes:

i. la préparation d'une composition (B) par mélange du composant polyol (b) avec un copolymère à blocs polystyrène-bloc-polybutadiène-bloc-poly(méthacrylate de méthyle) (c), le rapport en poids du composant polyol (b) au copolymère à blocs (c) étant compris entre 95/5 et 20/80,
ii. le mélange de la composition (B) avec le composant polyisocyanate (a) en des quantités respectives telles que le rapport du nombre de fonctions isocyanate au nombre de fonctions alcool soit compris entre 1,00 et 1,20.

**20.** Matériau polymérisé transparent obtenu par durcissement thermique de la composition polymérisable selon l'une quelconque des revendications 1 à 16.

**21.** Article optique comprenant un matériau polymérisé transparent selon la revendication 20.

**22.** Article optique selon la revendication 21, **caractérisé par le fait qu'**il s'agit d'une lentille ophtalmique.

Office européen des brevets

# RAPPORT DE RECHERCHE EUROPEENNE

Numéro de la demande
EP 07 29 0045

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| A | US 2004/167311 A1 (SLAGEL ET AL) 26 août 2004 (2004-08-26) * alinéa [0008] - alinéa [0022] * * alinéa [0032] - alinéa [0033]; revendications 1-15,24-38,45-49; exemples 1-5 * | 1,7,8,12 | INV. C08G18/32 G02B1/04 |
| A | EP 0 131 714 A (THE UPJOHN COMPANY) 23 janvier 1985 (1985-01-23) * page 3, ligne 23 - page 6, ligne 14 * * page 11, ligne 38 - page 12, ligne 8; revendications 1,5,7,8; exemple 3 * | 1 | |
| A | EP 0 739 946 A (BAYER) 30 octobre 1996 (1996-10-30) * page 2, ligne 44 - page 3, ligne 59 * * page 5, ligne 30 - ligne 38; revendications 1-4; exemple 3 * | 1-6,17 | |
| A | EP 0 780 413 A (OPTIMA) 25 juin 1997 (1997-06-25) * page 4, ligne 18 - page 6, ligne 11; revendications 1,5,9 * | 1 | |

DOMAINES TECHNIQUES RECHERCHES (IPC)

C08G
G02B
C08L

Le présent rapport a été établi pour toutes les revendications

| Lieu de la recherche | Date d'achèvement de la recherche | Examinateur |
|---|---|---|
| La Haye | 10 mai 2007 | Bourgonje, Andreas |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

4
EPO FORM 1503 03.82 (P04C02)

## ANNEXE AU RAPPORT DE RECHERCHE EUROPEENNE RELATIF A LA DEMANDE DE BREVET EUROPEEN NO.

EP 07 29 0045

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

10-05-2007

| Document brevet cité au rapport de recherche | Date de publication | Membre(s) de la famille de brevet(s) | Date de publication |
|---|---|---|---|
| US 2004167311 A1 | 26-08-2004 | EP 1597296 A1 | 23-11-2005 |
| | | JP 2006514135 T | 27-04-2006 |
| | | WO 2004076518 A1 | 10-09-2004 |
| | | US 2005085617 A1 | 21-04-2005 |
| EP 0131714 A | 23-01-1985 | CA 1269192 A1 | 15-05-1990 |
| | | DE 3486281 D1 | 07-04-1994 |
| | | DE 3486281 T2 | 07-07-1994 |
| | | JP 2018015 C | 19-02-1996 |
| | | JP 7035474 B | 19-04-1995 |
| | | JP 60038458 A | 28-02-1985 |
| | | US 4567236 A | 28-01-1986 |
| EP 0739946 A | 30-10-1996 | AT 217644 T | 15-06-2002 |
| | | CA 2174596 A1 | 25-10-1996 |
| | | DE 19514947 A1 | 31-10-1996 |
| | | ES 2174991 T3 | 16-11-2002 |
| | | JP 8295717 A | 12-11-1996 |
| | | US 5760133 A | 02-06-1998 |
| EP 0780413 A | 25-06-1997 | CN 1175964 A | 11-03-1998 |
| | | GB 2313839 A | 10-12-1997 |
| | | WO 9723529 A1 | 03-07-1997 |
| | | JP 3007993 B2 | 14-02-2000 |
| | | TW 380149 B | 21-01-2000 |
| | | US 5679756 A | 21-10-1997 |

EPO FORM P0460

Pour tout renseignement concernant cette annexe : voir Journal Officiel de l'Office européen des brevets, No.12/82

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description

- WO 0192415 A
- WO 2005073314 A
- WO 2005014699 A